# EUROPEAN PATENT APPLICATION

(11) **EP 3 147 857 A1**
(43) Date of publication of application: **29.03.2017**
(21) Application number: 15796794.4
(22) Date of filing: 18.05.2015
(51) Int. Cl.: G06Q 50/10

(54) **SYSTEM AND METHOD FOR OPERATING COMPETITION GAME**

(30) Priority: 22.05.2014 KR 20140061456
(71) Applicant: Redduck Inc., Seoul 135-873 (KR)
(72) Inventor: OH, Kyeong Taek, Seoul 136-734 (KR); CHO, Seok Hyeon, Seoul 135-873 (KR); AN, Young Sub, Bucheon-si Gyeonggi-do 420-700 (KR)
(74) Representative: Beetz & Partner mbB
(86) International application number: PCT/KR2015/004976
(87) International publication number: WO 2015/178651

(57) **Abstract**

The present invention relates to a competition game operating system and a competition game operating method which support to maintain a balance between teams by adding a virtual participant who is replaced with a participant who will participate later when the number of participants is smaller than a total number of participants set for each team in a competition game and assign a mission to a participant in each team to carry on competition the game freely from a team mission.

## Description

### BACKGROUND OF THE INVENTION

### 1. Field of the Invention

The present invention relates to a competition game operating system and a competition game operating method, and more particularly, to a competition game operating system and a competition game operating method which support to maintain a balance between teams by adding a virtual participant who is replaced with a participant who will participate later when the number of participants is smaller than a total number of members set for each team in a competition game and assign a mission to a participant in each team to carry on competition freely from a team mission.

### 2. Description of the Related Art

Currently, various online games appear in accordance with diffusion of an Internet network. Among various online games, specifically, an online competition game in which various users participate to match their skills is remarkably getting the spotlight due to the characteristics of the online game.

The online competition game includes all genres in which a plurality of participants matches their skills, such as a real time strategy (RTS) game, a massive multiplayer online role playing game (MMORPG), a fighting game, a racing game, and the like. Among the competition games, a specifically popular genre is a first person shooting (FPS) game.

The online competition game is configured to establish a competition room for a game in a lobby by a user who accesses the competition game to induce team members to different teams.

Accordingly, according to the online competition game operating method of the related art, a procedure of establishing a competition room by means of a user who establishes the competition room and waiting or a procedure of selecting an available competition room by means of a participant are required. Therefore, it is not convenient to participate in the game.

In the meantime, according to the online competition game operating method of the related art, a victory or defeat is determined for the entire team so that an ability of a participant who participates in each team is very important as an essential factor that affects the victory or defeat of the team.

Therefore, the participant who participates in the competition room examines scores of the team members and then is unilaterally concentrated to a team having a good score.

In this case, the number of participants in any one team is unilaterally increased so that participant who is a member of a team with a smaller number of participants can do nothing but lose the game. Therefore, the participant may lose interest of the game and continuously leave the team so that it is difficult to consistently maintain the room.

Further, when a beginner who is less experienced for the game or has a bad score participates in the competition room to consistently affect the defeat of the team due to the bad skill, the beginner participant may be blamed by other participants. Therefore, the beginner participant may be naturally reluctant to play the game.

In order to solve the above-described problems, the current online competition game employs a method which divides levels of the users to restrict a high level user so as not to participate in a beginner level competition room.

However, according to this method, when a high level user creates a new assistant character instead of a main character which is developed by the user, a level of the assistant character is set to the lowest level so that the high level user may participate at a low level in order to develop the assistant character. Therefore, the high level user may indiscriminately intrude the beginner level competition room to break a balance of the team using an item or their skills so that the game may be unilaterally played. In this circumstance, a beginner in the same team may be blamed or ignored due to unskilled manipulation. Further, a beginner in an opposite team may be unilaterally defeated. Therefore, a problem caused when the high level user participates in an beginner level game with an assistant character is serious.

Therefore, development of a system which allows a beginner to freely enjoy the game regardless of the intrusion of a high level user while maintaining a balance between teams is demanded.

### [Related Art Document]

### [Patent Document]

Korean Unexamined Patent Application Publication No. 10-2010-0070131

### SUMMARY OF THE INVENTION

An object of the present invention is to support to maintain a total number of members in each team to be equal all the time so as not to break the balance between the teams and support a beginner to comfortably participate in a game without being bothered by a high level participant by excluding the victory and defeat of the team in a competition room so that participants who participate in the competition room does not affect a score of another participant.

Another object of the present invention is to provide a system which limits stay of a high level user in a competition room when the high level user creates an assistant character to intrude a competition room where beginners are gathered, thereby minimizing influence by the high level user. Therefore, the influence of the high level user on the beginner is minimized and the high level users are also supported to consistently develop the assistant character so that all users may satisfy the game.

According to an aspect of the present invention, an competition game operating system includes: a competition room establishing unit which establishes one or more competition rooms for competition between different teams in an online game; a competition room management unit which creates a virtual participant for an empty slot of each team so as to make a total number of members in each competition room equal or replaces any one of virtual participants belonging to any one of competition rooms with a participant corresponding to a user device; a game executing unit which communicates with the user device to execute an online game corresponding to a competition room in which the user device participates; a mission assigning unit which sets at least one mission to each of participants who participate in the competition room; and a mission management unit which interworks with the game executing unit to withdraw a participant who completes the mission in the online game corresponding to the competition room.

In an embodiment of the present invention, the competition room establishing unit may set a number of participants who is capable of participating in each team in advance to establish the competition room.

In an embodiment of the present invention, the virtual participant may be configured by an artificial intelligence character in an online game corresponding to the competition room.

In an embodiment of the present invention, the competition room management unit may provide a link for accessing the competition room and allow a user device which accesses through the link to randomly participate in any one of one or more competition rooms as the participant.

In an embodiment of the present invention, the competition room management unit may determine the number of virtual participants belonging to each of the competition rooms as a number of empty slots in which the participant is capable of participating and additionally establish a competition room for a user device which accesses when the empty slots run out, by means of the competition room establishing unit to allow the user device to participate in the additional competition room as a participant.

In an embodiment of the present invention, the mission assigning unit may transmit mission information on a mission which is set correspondingly to each participant who participates in the competition room to the user device corresponding to the participant.

In an embodiment of the present invention, the mission may be to obtain points which are set in advance in an online game corresponding to the competition room or to remove a predetermined number of participants from an opposite team.

In an embodiment of the present invention, the mission assigning unit may provide a predetermined delay time to determine to cancel the participation at the time of starting an online game corresponding to the competition room and interwork with the competition room management unit to withdraw a participant who selects participation cancel within the predetermined delay time from the competition room.

In an embodiment of the present invention, the competition room management unit may preferentially assign a participant who participates in the competition room to a team which has less participants among teams belonging to the competition room.

In an embodiment of the present invention, when an empty slot is generated in the competition room due to the withdrawal of the participant, the mission management unit may interwork with the competition room management unit to allow a virtual participant to participate in the empty slot of the competition room.

In an embodiment of the present invention, when there is no participant in the competition room, the competition room management unit may reset or remove the competition room.

In an embodiment of the present invention, when the number of remaining competition rooms is equal to or smaller than a predetermined number of competition rooms, the competition room management unit may not reset or remove the competition room from which all participants corresponding to the user devices leave.

In an embodiment of the present invention, the mission assigning unit may randomly select at least one of a plurality of predetermined different missions to set correspondingly to each participant, and the mission management unit may withdraw a participant who completes all missions set by the mission assigning unit from the competition room.

In an embodiment of the present invention, when a mission is completed, the mission management unit may provide a predetermined reward corresponding to a completed mission to the user device.

According to another aspect of the present invention, a competition game operating method includes: establishing one or more competition rooms for competition between different teams in an online game by means of an online game server which provides the online game; generating a virtual participant for an empty slot of each team and allowing the virtual participant to participate in the empty slot by means of the online game server so as to make the total number of members in the teams belonging to the competition room equal; replacing any one of virtual participants belonging to any one of the competition rooms with a participant corresponding to the user device; setting at least one missions for each of participants who participate in the competition room, by means of the online game server; and executing an online game corresponding to the competition room in which the participant participates through the replacing, by communicating with the user device by means of the online game server, and withdrawing a participant who completes the mission from the competition room.

In an embodiment of the present invention, the virtual participant may be configured by an artificial intelligence character in an online game corresponding to the competition room.

In an embodiment of the present invention, the participating may further include preferentially replacing a virtual participant of a team which has less participants among teams belonging to the competition room with a participant who participates in the competition room, by means of the online game server.

In an embodiment of the present invention, the withdrawing may further include generating the virtual participant and allowing the virtual participant to participate in the empty slot of the competition room, by means of the online game server when an empty slot is generated in the competition room due to the withdrawal of the participant.

According to the exemplary embodiment of the present invention, the competition game operating system establishes a competition room for competition between different teams in an online game and allows virtual participants to participate in an empty slot of each team to maintain the total number of members of each team belonging to the competition room to be equal so that a balance between teams is not broken. The victory or defeat of the team is excluded in the competition room and independent missions are assigned to individual participants belonging to each team to complete the individual missions in the competition room and a participant who completes the mission is withdrawn from the competition room so that participants who participate in the competition room do not affect a score of another participant. Therefore, a beginner is not bothered by other participants but comfortably enjoy the competition game and the influence of the expert on the beginner is minimized, thereby improving game accessibility of the beginner.

The present invention is configured to withdraw a participant who completes the mission from the competition room to minimize an influence by a high level user who creates an assistant character to compete with the beginner. Therefore, a sufficient opportunity is provided to the beginner so as to experience the competition. Further, the high level user participates in a plurality of competition rooms to complete missions and consistently increase a level. Therefore, all participants may satisfactorily play the game.

Furthermore, according to the invention, when an empty slot is generated in the competition room, a virtual participant is immediately created to maintain a balance between teams. Further, a participant who solely participates in an initially established competition room may start the game without having a waiting time so that the participant does not need to wait until another participant participates, so that convenience of the user is improved.

### BRIEF DESCRIPTION OF THE DRAWINGS

FIG. 1 is a configuration environment view of a competition game operating system according to an exemplary embodiment of the present invention.
FIG. 2 is a detailed configuration view of an online game server which configures a competition game operating system according to an exemplary embodiment of the present invention.
FIG. 3 is a view of an example of establishing a competition room and managing participation by an online game server according to an exemplary embodiment of the present invention.
FIG. 4 is a view of an example of providing of a link for participating in a competition room by an online game server according to an exemplary embodiment of the present invention.
FIG. 5 is a view of an example of managing a competition room and providing a game corresponding to a competition room by an online game server according to an exemplary embodiment of the present invention.
FIG. 6 is a view of an example of replacing a virtual participant with a participant by an online game server according to an exemplary embodiment of the present invention.
FIG. 7 is a view of an example of managing a mission and managing a competition room in accordance with completion of a mission by an online game server according to an exemplary embodiment of the present invention.
FIG. 8 is a view of an example of managing a competition room when a participant cancels the participation of the competition room by an online game server according to an exemplary embodiment of the present invention.
FIG. 9 is a view of an example of providing mission information by an online game server according to an exemplary embodiment of the present invention.
FIG. 10 is a view of an example of managing a competition room when an empty slot is generated in accordance with completion of a mission by an online game server according to an exemplary embodiment of the present invention.
FIG. 11 is a flowchart of a competition game operating method according to an exemplary embodiment of the present invention.

### DETAILED DESCRIPTION OF THE PREFERRED EMBODIMENT

A competition game operating system according to an exemplary embodiment of the present invention establishes a competition room for competition between different teams in an online game, allows a virtual participant to participate in an empty slot of each team to maintain the total number of members of each team belonging to the competition room to be equal so that the balance between teams is not broken. Further, a victory and defect of each team is excluded from the competition room and independent missions are assigned to individual participants belonging to each team to complete the individual missions in the competition room. Therefore, participants who participate in the competition room do not affect the score of another participant, so that accessibility of the beginner may be improved.

Further, the present invention is configured to withdraw a participant who completes the mission from the competition room to minimize an influence by a high level user. Therefore, a sufficient opportunity is provided to the beginner so as to experience the competition. Further, the high level user participates in a plurality of competition rooms to complete missions and consistently increase a level. Therefore, all participants may satisfactorily play the game.

Hereinafter a detailed exemplary embodiment of a competition game operating system according to an exemplary embodiment of the present invention will be described in detail with reference to the drawings.

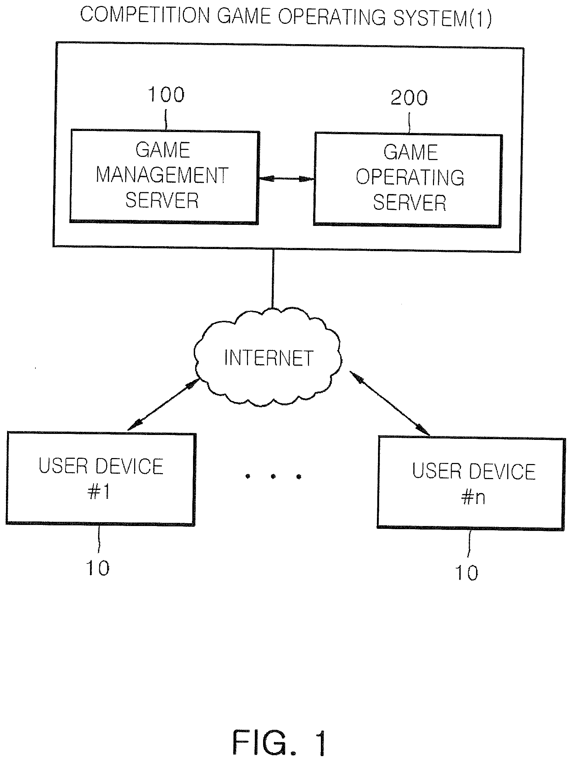

FIG. 1 is a configuration environment view of a competition game operating system according to an exemplary embodiment of the present invention. As illustrated in FIG. 1, the competition game operating system may include a game management server 100 which establishes and manages a competition room for competition between different teams and a game operating server 200 which provides game data to a user device 10 which accesses the competition room to execute a game corresponding to the competition room, assigns a mission to the user device 10 which accesses the competition room, and determines whether to withdraw a participant corresponding to the user device 10 which participates in the competition room depending on whether to complete the mission.

In this case, the user device 10 may include a tablet PC, a laptop computer, a smart phone, a personal digital assistant (PDA), and a mobile communication terminal in addition to a personal computer (PC).

Further, a game described in the present invention includes all game genres in which a plurality of users participates, such as a first person shooting (FPS) game, a real-time strategy (RTS) game, a massive multiplayer online role playing game (MMORPG), a fighting game, a racing game, and the like.

Based on the above-described configuration, a process of accessing a competition game operating system, by the user device 10 will be described. The user device 10 transmits login information to a game management server 100 through the Internet and the game management server 100 authenticates a user of the user device 10 based on the login information. When the authentication is confirmed, the game management server 100 provides various game contents related to an online game to the user device 10.

In this case, the game management server 100 may provide one or more competition rooms to the accessed user device 10 to participate in the online game and allow the user device 10 which accesses any one of the competition rooms to register in any one of a plurality of teams belonging to the competition room as a participant to participate in the competition room.

In the meantime, the game operating server 200 executes an online game corresponding to the competition room and transmits game data to the user device 10 which accesses the game operating server 200 through a link provided by the game management server 100 to execute the online game corresponding to the competition room and allows the user device 10 to play the online game.

In this case, the game management server 100 registers another user device which accesses the competition room of the user device 10 as a participant in another one team among the plurality of teams belonging to the competition room.

Therefore, the game operating server 200 executes the online game through communication with another user device to play the online game and provides an online game so as to allow one or more participants belonging to any one team of different teams in the same competition room and one or more participants belonging to another team to compete with each other.

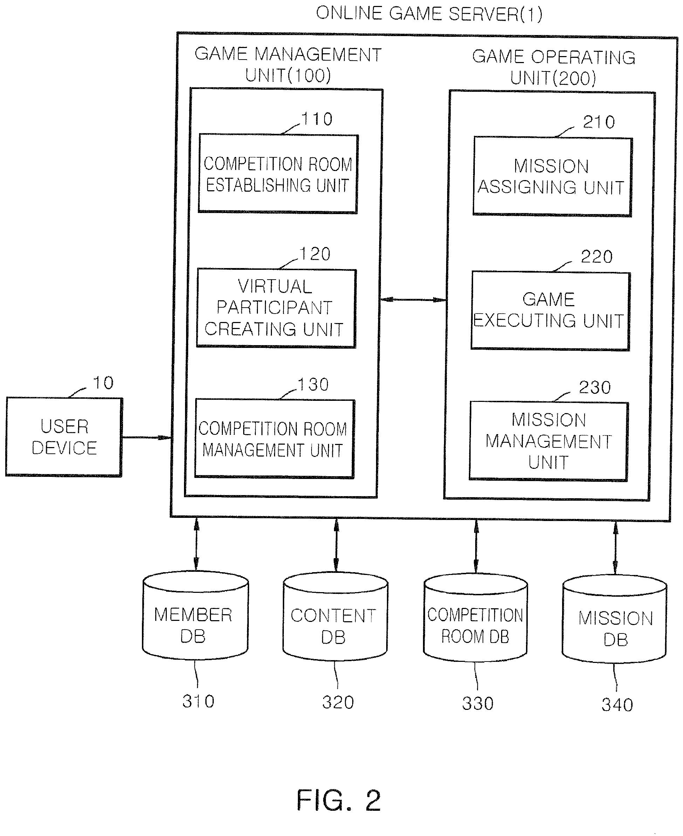

A detailed configuration of a competition game operating system according to an exemplary embodiment of the present invention will be described based on the above-described configuration with reference to FIG. 2.

Prior to description, the competition game operating system 1 may be configured by one online game server 1. As illustrated in the drawing, the game management server 100 and the game operating server 200 may be combined in the online game server 1 as individual components.

In this case, it is obvious that the game management server 100 and the game operating server 200 may be combined in the online game server 1 as one component or a partial configuration is divided into individual configurations. However, the present invention is not limited thereto.

Hereinafter, for the convenience of description, the game management server 100 and the game operating server 200 will be described as a configuration of an online game server 1 illustrated in FIG. 2, but may also be configured as individual servers. However, the present invention is not limited thereto.

As illustrated in the drawings, the online game server 1 may include a game management unit 100 and a game operating unit 200. The game management unit 100 may include a competition room establishing unit 110, a virtual participant creating unit 120, and a competition room management unit 130.

In this case, the components of the game management unit 100 are divided to distinguish functions. A plurality of components may be combined to be one or a part of a function of each component may be combined in another component. For example, the virtual participant creating unit 120 may be included in the competition room management unit 130.

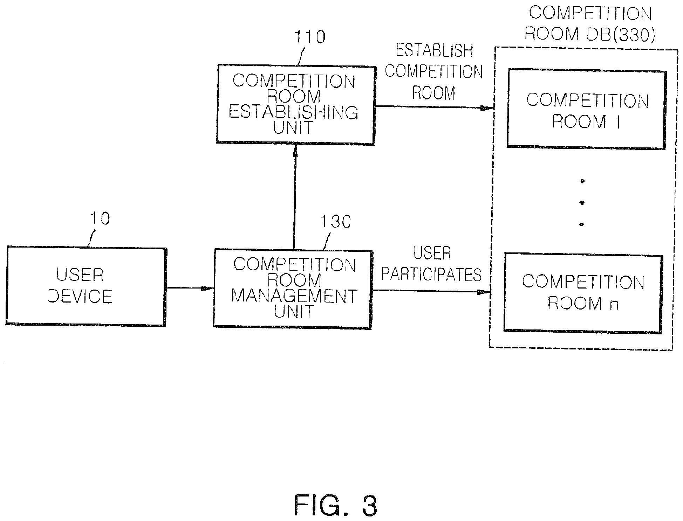

Each component will be described in detail based on the above-described configuration with reference to the drawing. First, the competition room establishing unit 110 may establish one or more competition rooms for competition between two different teams in the online game in advance, as illustrated in FIG. 3.

In this case, the competition room establishing unit 110 creates the competition room as a room for a personal mission which is different from a normal room for a team mission to be stored in a competition room DB 330, thereby creating the competition room to be distinguished from the normal room.

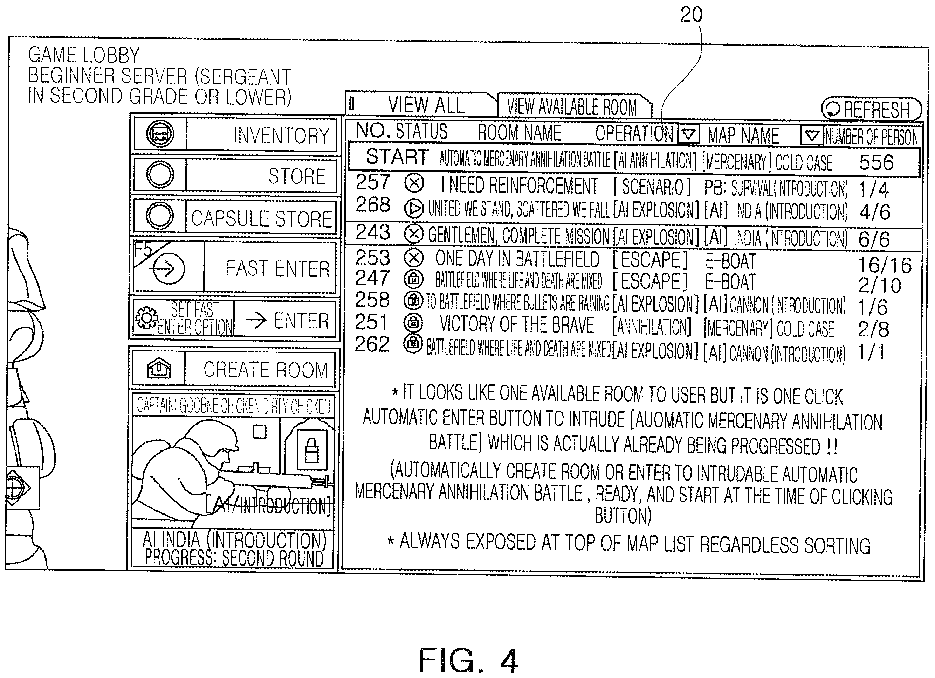

Further, the competition room management unit 130 may transmit list information on the competition room and the normal room stored in the competition room DB 330 as illustrated in FIG. 4 to the user device 10 which is authenticated based on the login information of the user device 10 which accesses the online game server 1 and member information of a member DB 310.

In this case, the competition room management unit 130 may provide a link 20 for accessing the game operating unit 200 which provides online games corresponding to the plurality of competition rooms which is different from the normal room which is selectively accessed by the user device 10, to be included in the list information. When the link 20 of the user device 10 is selected, the user device 10 may randomly participate in any one of the competition rooms and the online game corresponding to the competition room in which the user device 10 participates may be provided to the user device 10 which accesses the game operating unit 200 through the link 20.

Further, it is obvious that the competition management unit 130, as illustrated in FIG. 4, counts the number of participants who belong to all competition rooms to provide the number of participants to the user device 10.

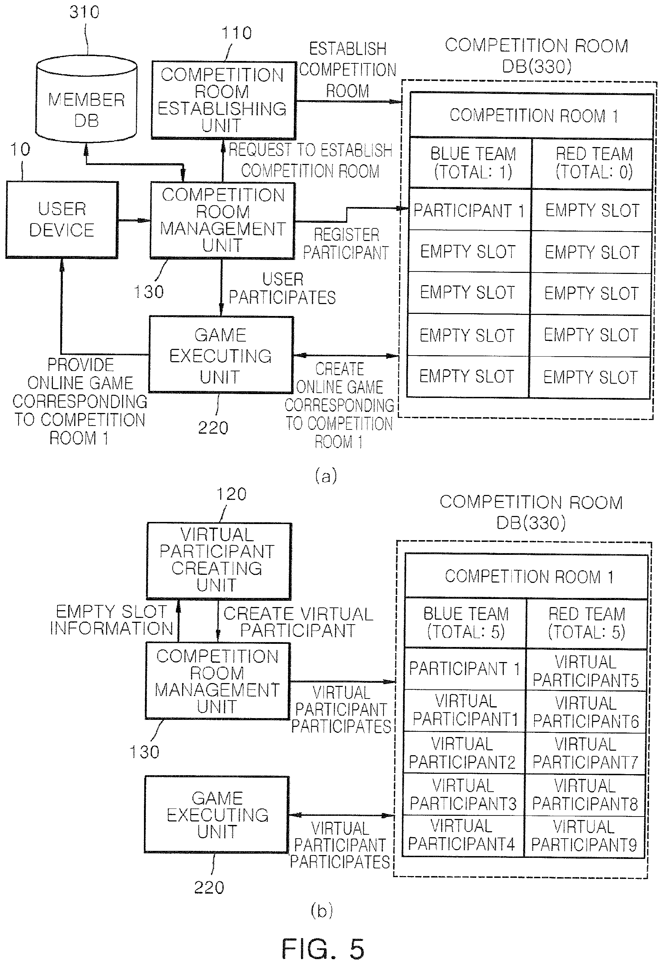

In the meantime, the game management unit 100 according to the exemplary embodiment of the present invention may maintain the total number of members of each team which belongs to the competition room to be equal, so as to maintain a balance between teams of the competition room for competition between different teams, which will be described in detail with reference to FIG. 5.

First, as illustrated in FIG. 5A, the competition room management unit 130 establishes a competition room in accordance with initialization or request the competition establishing unit 110 to establish a competition room when all competition rooms stored in the competition room DB 330 do not have an available empty slot. Further, the competition room management unit 130 may store competition room information on the established competition room in the competition room DB 330.

By doing this, the competition room management unit 130 may register the user device 10 in any one of two different teams for competition in the competition room as a participant to allow the user device 10 to participate. In this case, the competition room management unit 130 registers the participant who participates in each competition room in competition room information corresponding to the participant in the competition room DB 330 to update and manage a participating condition for every competition room.

Further, when a user has a level or capability which is higher than a level or a skill level set in advance based on member information stored in the member DB 310 for the user device 10 which participates in the competition room, the competition room management unit 130 restricts participation of the user to the competition room.

In the meantime, as illustrated in the drawing, the competition room establishing unit 110 limits an available number of participants for each team of the competition room. For example, in the case of five to five competition, five are set as the number of allowed participants for each team to establish the competition room. In this case, the competition room management unit 130 may interwork with the competition room establishing unit 110 to change the available number (the number of participants).

In the meantime, as illustrated in FIG. 5A, when only the user device 10 participates in a competition room which is initially established or additionally established, as a participant, each team has an empty slot and the participant cannot play a competitive game alone. Therefore, the user needs to wait.

Therefore, as illustrated in FIG. 5B, when the competition room is established, the competition room management unit 130 provides competition room information to the virtual participant creating unit 120. The virtual participant creating unit 120 creates one or more virtual participants for the competition room which is initially or additionally established and then provides the one or more virtual participants to the competition room management unit 130.

By doing this, the competition room management unit 130 registers the one or more virtual participants which are created by the virtual participant creating unit 120 to make the total number of members of different teams equal, in empty slots of the teams belonging to the competition room corresponding to the competition room information stored in the competition room DB 330 to allow the one or more virtual participants to participate. In this case, the virtual participant is configured by artificial intelligence (AI) data and may be executed as an AI character when the online game corresponding to the competition room is executed.

In this case, for more understanding of participation of a virtual participant in Fig. 5, it is illustrated that the competition room management unit 130 creates the virtual participant after the participant participates to allow the virtual participant to participate in the competition room. However, it is obvious that the competition room management unit 130 simultaneously establishes the competition room and creates one or more virtual participants to allow the one or more participants to participate in the competition room.

Therefore, the competition room management unit 130 supplements a virtual participant to play the competition in accordance with the execution of the online game in the competition room in which the participant participates alone. Further, the competition room management unit 130 supplements the virtual participants so as to make the total number of members of the teams equal to maintain a balance between different teams belonging to the competition room.

In the meantime, according to a configuration of FIG. 5A, the competition room management unit 130 registers the user device 10 which participates in the competition room through the link 20 of FIG. 4 in any one competition room information among one or more competition room information stored in the competition room DB 330 to allow the user device 10 to participate in the competition room in order to execute the online game corresponding to the competition room. Further, the competition room management unit 130 accesses the user device 10 which accesses through the link 20 to execute the online game corresponding to the competition room, to a game executing unit 220 of a game operating unit 200.

In this case, the competition room management unit 130 registers the member information of the user device 10 to the competition room information of the competition room DB 330 to allow the user device 10 to participate in the competition room and provide the member information of the user device 10 which access a game executing unit 220, to the game executing unit 220.

Further, the game executing unit 220 receives the member information of the user device 10 which accesses the game executing unit 220 by the competition room management unit 130 from the competition room management unit 130. The game executing unit 220 compares the member information and one or more competition room information stored in the competition room DB 330 to transmit game data for executing an online game corresponding to the competition room in which the user device 10 participates based on the competition room information of the competition room in which the user device 10 participates to the user device 10.

By doing this, the user device 10 executes the online game corresponding to the competition room through communication with the game executing unit 220. The user device 10 manipulates a character corresponding to the user device 10 in the online game to compete with a character of other participant or virtual participant which belongs to a competition room.

Further, as illustrated in FIG. 5B, the game executing unit 220 reflects the virtual participant which is registered in the competition room information of the competition room DB 330 to participate in the online game to the game data to control the virtual participant to automatically play the online game corresponding to the competition room to which the user device 10 belongs, as an AI character, thereby allowing the character corresponding to the participant and other AI character to compete with each other.

In the meantime, the competition room management unit 130 allows another user device which accesses the competition room management unit 130 through the link 20 of FIG. 4 to randomly participate in any one of a plurality of competition rooms.

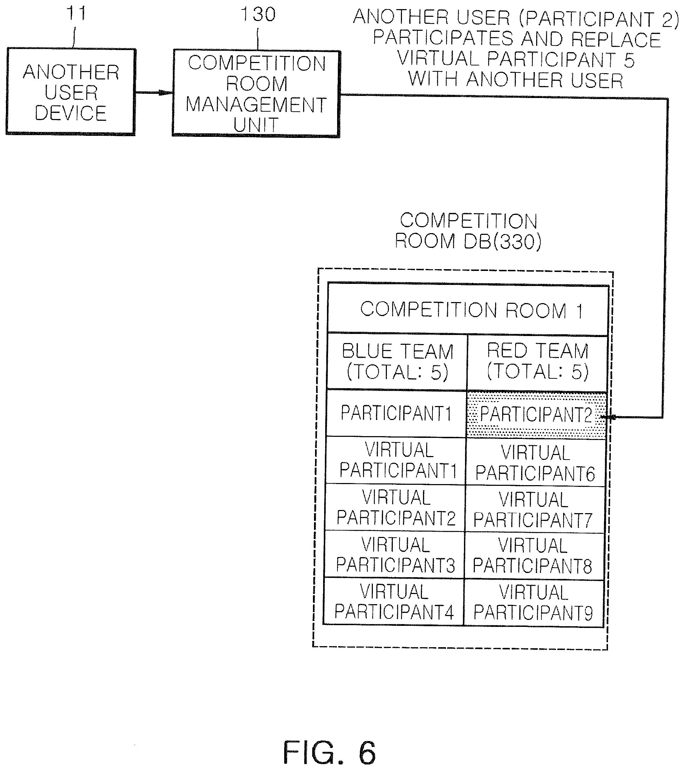

In this case, as illustrated in FIG. 6, the competition room management unit 130 allows another user device 11 to randomly participate in any one of a plurality of competition rooms which has a virtual participant, as a participant (participant 2) by replacing any one (virtual participant 5) among one or more virtual participants belonging to the competition room with the participant (participant 2) corresponding to another user device 11.

In other words, the competition room management unit 130 may determine the number of one or more virtual participants belonging to each competition room as a number of empty slots which allows participation of another user device 11. Therefore, the competition room management unit 130 may replace the virtual participant with a participant corresponding to one or more user devices until the virtual participants belonging to the competition room run out.

In this case, the competition room management unit 130 may additionally establish a competition room by means of the competition room establishing unit 110 for another user device 11 which access when the empty slots run out to allow another user device 11 to participate in the additional competition room as a participant.

Therefore, the competition room management unit 130 maintains the total number of members in each team to be equal to each other by adding the virtual participants corresponding to the artificial intelligence so as not to cause imbalance between the teams. Further, the competition room management unit 130 replaces the virtual participant corresponding to the artificial intelligence of each team with a participant corresponding to another user device 11 to allow competition between users having a higher intelligence than the AI character.

Further, when a participant 2 corresponding to another user device 11 participates in a competition room 1 in which a participant 1 corresponding to the user device 10 participates, the game executing unit 220 transmits game data through which the participant 1 participates through communication with another user device 11 to compete with the virtual participant or another participant according to the above-described configuration to another user device 11 to execute the online game.

Further, the game executing unit 220 transmits game data to which the participation of the participant 2 is applied to the user device 10 corresponding to the participant 1 and the participant 1 may check the participation of the participant 2 in the game which is being played.

In other word, in a state when the online game is being played by the participant 1, the virtual participant may be replaced with the participant 2 so that the participant 2 may intrude the game which is being played by the participant 1 and may compete with the participant 1 or play the game in the same team as the participant 1.

Further, the competition room management unit 130 preferentially allocates an additional participant corresponding to a user device which participates after establishing the competition room to a team which has less participants among teams belonging to the competition room to maintain the number of participants in each team to be equal, thereby removing imbalance between teams.

In the above-described configuration, when all participants corresponding to the user devices leave the competition room or ends the connection to the competition room, the competition room management unit 130 may reset or remove the competition room which does not have participants. Therefore, the game executing unit 220 may end an online game corresponding to the reset or removed competition room.

In this case, when the number of remaining competition rooms is equal to or smaller than a predetermined number of competition rooms, the competition room management unit 130 may not reset or remove the competition room from which all participants corresponding to the user devices leave and consistently maintain the predetermined number of competition rooms.

In the meantime, as illustrated in FIG. 2, the game operating unit 200 may include a mission assigning unit 210, the game executing unit 220, and a mission management unit 230.

In this case, the components of the game operating unit 200 are divided to distinguish functions. A plurality of components may be combined to be one or a part of a function of each component may be combined in another component.

Further, the game operating unit 200 provides an online game corresponding to the competition room, as described above, assigns a personal mission to each participant belonging to the competition room, rather than a team mission, and withdraws a user who accomplishes the mission from the competition room. Therefore, a reward which is achieved by a high level user having a high skill level when the high level user removes or defeats the beginner in the competition room is restricted so that the influence of the high level user on the beginner may be minimized. Further, the beginner does not perform the team mission together with another participant so that the beginner may concentrate his/her own mission and comfortably enjoy the game without being bothered by the other participants.

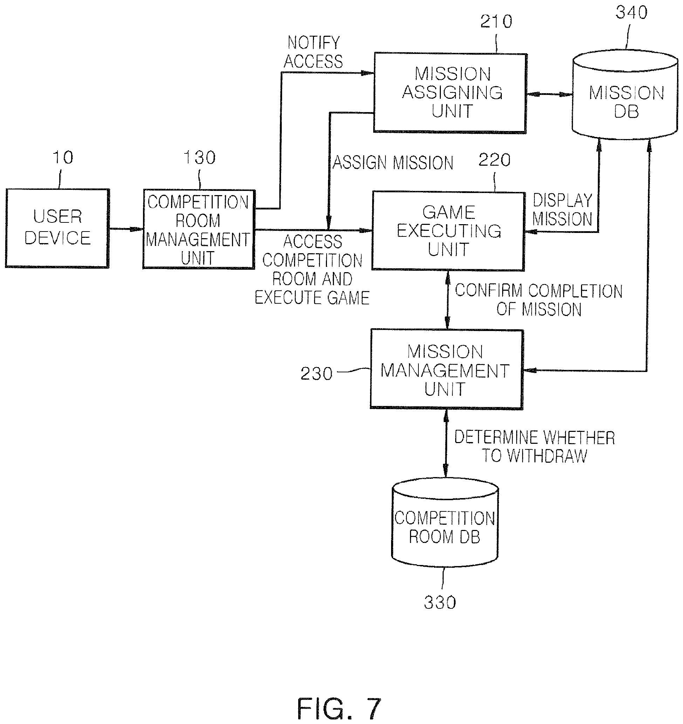

The configuration thereof will be described in detail through an exemplary embodiment of FIG. 7. First, the competition room management unit 130 allows the user device 10 to access the game executing unit 220 which executes the online game corresponding to the competition room to randomly participate in any one of one or more competition rooms.

By doing this, the game executing unit 220 communicates with the user device 10 which accesses the competition room to transmit various contents and game executing data extracted from a content DB 320 to execute the online game corresponding to the competition room in the user device 10, to the user device 10.

In this case, when the user device 10 accesses the game executing unit 220 to participate in the competition room, the competition room management unit 130 may transmit access information to notify the accessing of the user device 10 to the mission assigning unit 210. In this case, the access information may include competition room information on a competition room in which the user device 10 participates and member information of the user device 10.

Therefore, the mission assigning unit 210 assigns at least one mission which is performed by a participant corresponding to the user device 10 in the competition room in which the user device 10 participates to the participant. The mission assigning unit 210 generates mission information on one or more missions which are assigned to the participant and then stores the mission information in the mission DB 340 by matching identification information of the user device 10.

In this case, as the mission information, a mission to obtain a predetermined point or remove a predetermined number of participants of an opposite team may be set for a participant corresponding to the user device 10 in an online game corresponding to the competition room.

Further, the mission information may further include competition room information on a competition room in which the participant participates and the mission management unit 230 which will be described below may determine a mission room to which the mission is applied through the mission information.

Further, a plurality of different missions may be set in the mission assigning unit 210 or in a mission DB 340. The mission assigning unit 210 randomly selects at least one of the plurality of missions to assign (set) the mission to the user device 10.

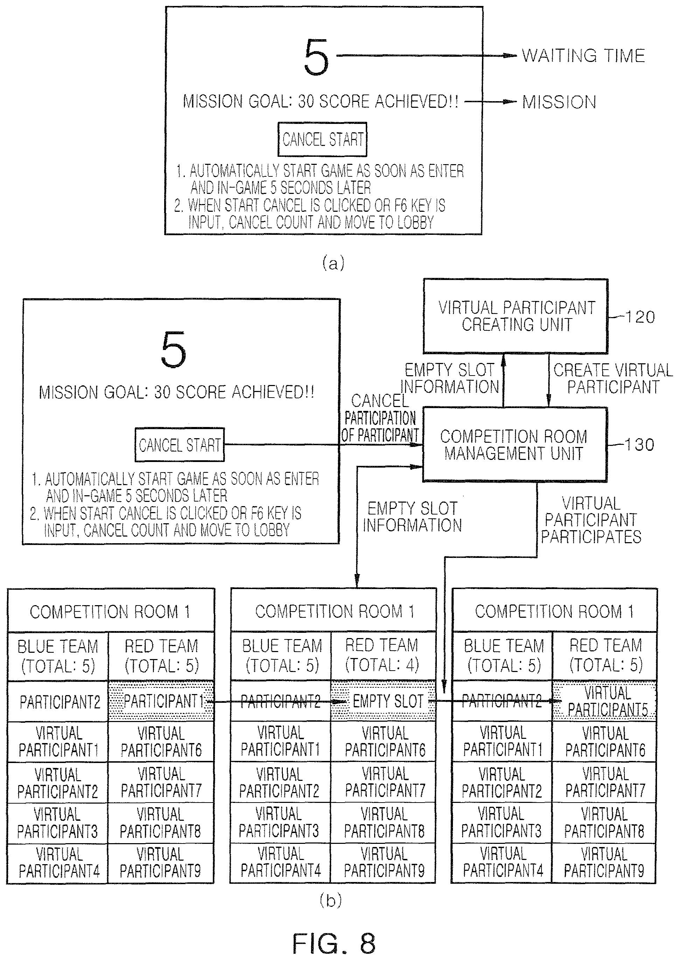

In the meantime, the mission assigning unit 210, as illustrated in FIG. 8A, transmits a loading page to the user device 10 which is accessing the game executing unit 220 by the competition room management unit 130 and provides a predetermined waiting time, mission information, and a participation cancel button which cancels the participation of the competition room through the loading page.

Therefore, the mission assigning unit 210 may transmit participation cancel information of the user device 10 which selects the participation cancel button through the loading page to the competition room management unit 130.

Next, as illustrated in FIG. 8B, the competition room management unit 130 which receives the participation cancel information blocks the access of the user device 10 which is accessing the game executing unit 220 and removes the participant 1 corresponding to the user device 10 which cancels the participation from the competition room information stored in the competition room DB 103 on the competition room 1 in which the user device 10 participates, to withdraw the participant 1 from the competition room 1.

Therefore, an empty slot is generated in the competition room 1 due to the absence of the user device 10 so that the competition room management unit 130 provides empty slot information of the competition room 1 to the virtual participant creating unit 120. The virtual participant creating unit 120 creates a virtual participant in accordance with the empty slot information to provide the virtual participant to the competition room management unit 130. The competition room management unit 130 allows the virtual participant to participate in the empty slot of the competition room 1.

By doing this, the virtual participant immediately participates in the competition room corresponding to the user device 10 which cancels the participation during the access of the game so that the balance between teams belonging to the competition room is maintained.

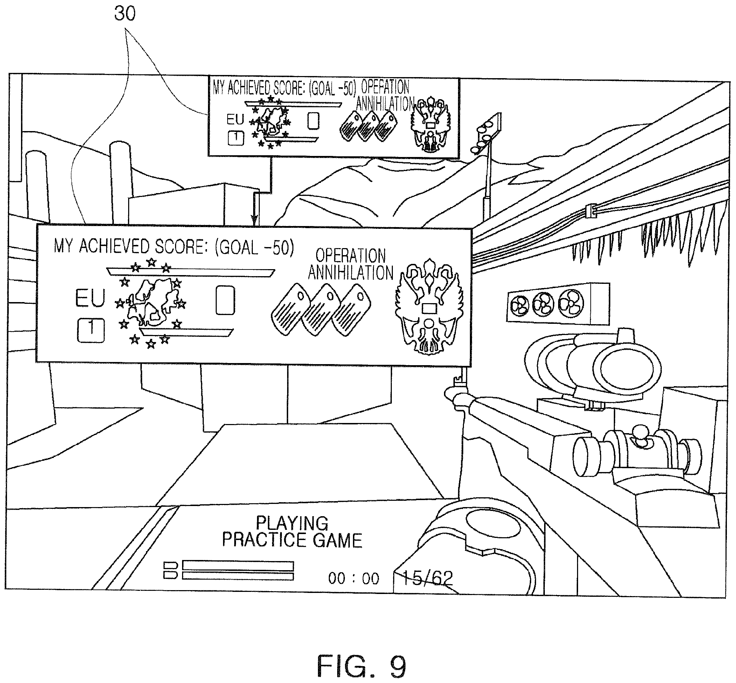

Referring to the configuration of FIG. 7 again, the game executing unit 220 communicates with the user device 10 to provide the online game corresponding to the competition room to the user device 10. The game executing unit 220 extracts mission information from the mission DB 340 and then transmits the mission information to the user device 10 as illustrated in FIG. 9, to output mission contents 30 in accordance with the mission information onto a game executing screen.

In the meantime, the mission management unit 230 interworks with the game executing unit 220 to collect game data of the user device 10 which is playing the game and compares the collected game data with mission information corresponding to the user device 10 stored in the mission DB 340 to determine whether to complete the mission.

Therefore, when the user device 10 completes the mission in accordance with the mission information in the competition room, the mission management unit 230 may withdraw a participant corresponding to the user device 10 which completes the mission in the competition room.

For example, the mission management unit 230 blocks the access of the user device 10 which completes the mission by the game executing unit 220 or withdraws the user device 10 by ending the online game corresponding to the competition room in which the user device 10 participates. Further, the mission management unit 230 may delete the participant corresponding to the user device 10 which completes the mission from the competition room information of the competition room in which the user device 10, which completes the mission, participates, from the competition room information stored in the competition room DB 330.

In this case, the mission management unit 230 may configure to withdraw only the participant who completes all missions included in the mission information corresponding to the competition room, from the competition room. When the participant is withdrawn, mission information corresponding to the participant may be reset or deleted from the mission DB 340.

When the mission is completed, the mission management unit 230 may provide a reward in accordance with the completion of the mission based on reward information which is set in advance correspondingly to the mission. The mission management unit 230 may transmit the reward information corresponding to the completed mission to the user device to be displayed on a screen of the user device.

In addition, the mission management unit 230 registers the reward in the member information of the member DB 310 to update the member information. For example, the competition room management unit 130 may change the skill level or increase a level of the user corresponding to the user device 10 in accordance with the increased reward.

By doing this, the present invention may support to create a new character with respect to a high level user (skilled user) to consistently participate in the plurality of competition rooms, thereby increasing a level. Further, the high level user quickly completes the mission in the competition room and then leaves the competition room, so that the influence of the high level user on the beginner is minimized, thereby preventing a situation in which the beginner is consistently removed or defeated.

Further, the present invention may support to assign a personal mission to every participant who participates in the competition. Therefore, even though a team competition in accordance with cooperation of the team members is performed, the mission is completed by individuals, regardless of the victory or defeat between teams or individual victory or defeat. Therefore, the beginner may comfortably enjoy the game without being bothered by the team or the individual victory or defeat.

In the meantime, when the mission completion of the participant is confirmed and thus the participant is withdrawn from the competition room, an empty slot is generated in the competition room. Therefore, the virtual participant participates in the empty slot of the competition room to maintain the balance between teams.

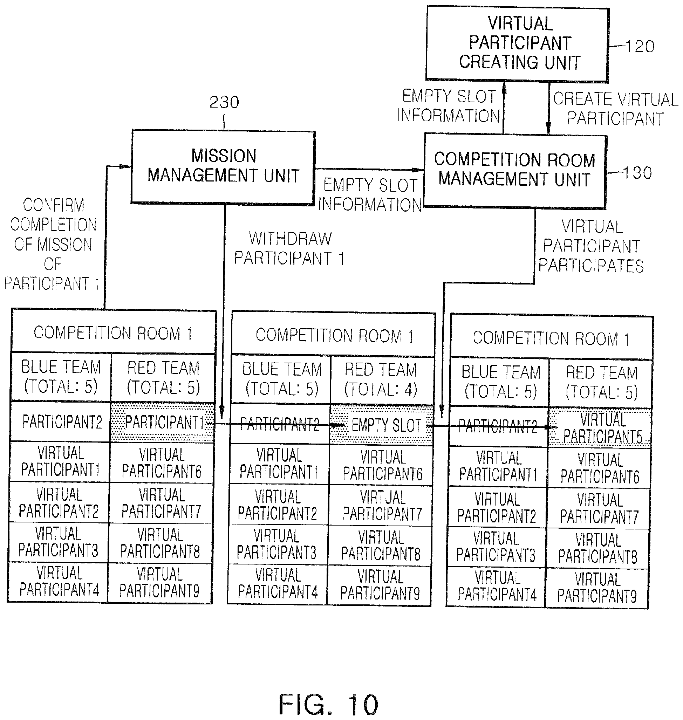

Detailed description will be made through an exemplary embodiment illustrated in FIG. 10. The mission management unit 230 provides information on an empty slot generated after withdrawing the participant 1 who completes the mission from the competition room 1 to the competition room management unit 130. The competition room management unit 130 recognizes the competition room 1 and a number of empty slots generated in the competition room 1 based on the empty slot information.

Further, the competition room management unit 130 provides the empty slot information to the virtual participant creating unit 120. The virtual participant creating unit 120 may create virtual participants as many as the number of empty slots to provide the created virtual participants to the competition room management unit 130.

Therefore, the competition room management unit 130 allows a virtual participant 5 which is created by the virtual participant creating unit 120 to participate in the competition room 1 from which the participant 1 is withdrawn to maintain the total number of members of each team belonging to the competition room 1 to be equal.

Further, the competition room management unit 130 provides information on the virtual participant 5 to the game executing unit 220 or updates the competition room information corresponding to the competition room 1 stored in the competition room DB 330 in accordance with the participation of the virtual participant 5. The game executing unit 220 applies the virtual participant 5 which is added to the competition room from which the participant 1 is withdrawn to game data corresponding to the competition room 1 based on the information on the virtual participant 5 received from the competition room management unit 130 or competition room information corresponding to the competition room 1 stored in the competition room DB 330 to transmit the game data to which the participation of the virtual participant 5 is applied to each user data belonging to the competition room 1.

Therefore, the participant 2 belonging to the competition room 1 may compete with the virtual participant 5 who participates in the middle of the game play.

In other words, according to the above-described configuration, the virtual participant 5 which participates in the empty slot of the participant 1 intrudes the competition room in the middle of the game play of the participant 2 belonging to the same competition room as the participant 1. The virtual participant 5 participates in the empty slot generated by withdrawing the participant 1, which is substantially same as a function of replacing the participant 1 with the virtual participant 5 to participate in the game.

Further, it is obvious that the virtual participant 5 may be replaced with another participant corresponding to another user device as described above at real time.

As described above, the present invention supports to replace the plurality of participants and virtual participants belonging to the competition room during the online game play at real time to participate and maintain the total number of members of each team to be equal so as not to cause imbalance of the total number of members between teams. Therefore, a fighting power of the participant belonging to the competition room is not affected by the empty slot generated in the team of the participant or the opposite team.

In the meantime, in the above-described configuration, the competition room management unit 130 connects a plurality of different competition rooms through the competition room establishing unit 110 to allow the user device 10 which completes the mission in one competition room and leaves the competition room to continuously and automatically participate in another competition room which is connected to the competition room and obtain the reward in accordance with consistent completion of mission in the competition room.

Further, the competition room management unit 130 connects different competition rooms with an endless loop through the competition room establishing unit 110 and allows the participant to infinitely participate in the competition rooms belonging to the endless loop in turns.

By doing this, a process of re-accessing the competition room is omitted so that the convenience of the user is increased.

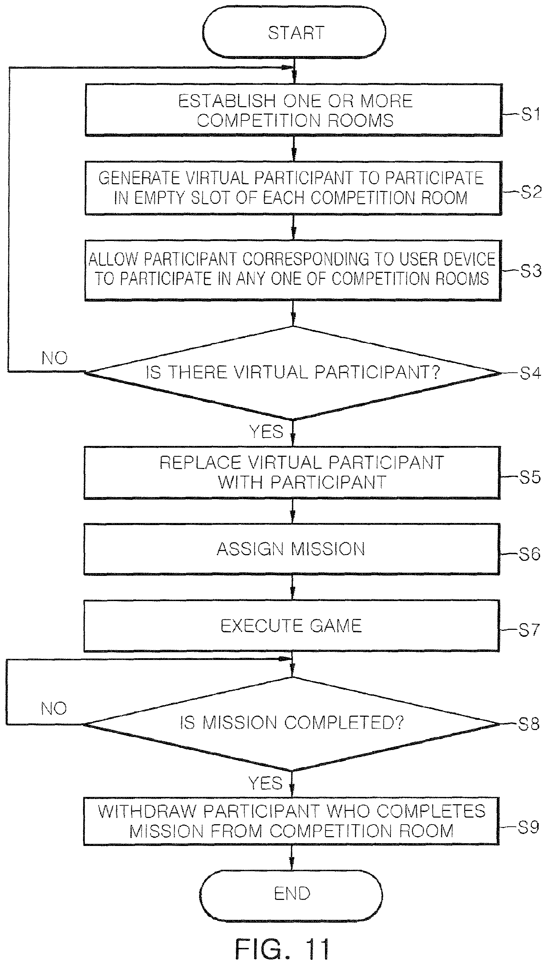

FIG. 11 is a flowchart of a competition game operating method according to an exemplary embodiment of the present invention. As illustrated in FIG. 11, an online game server 1 which provides an online game establishes one or more competition rooms for competition between different teams in the online game (S1).

Next, the online game server 1 creates a virtual participate for an empty slot of each team so as to make the total number of members of each team belonging to the competition room equal to allow the virtual participant to participate (S2).

Next, the online game server 1 allows a participant corresponding to a user device 10 to participate in any one of competition rooms (S3), searches for a competition room in which the virtual participant participates (S4), and replaces any one of the virtual participants with a participant to allow the user device 10 to participate in the competition room (S5).

Next, the online game server 1 sets at least one different missions to each of the participants who participate in the competition room (S6).

Next, the online game server 1 executes an online game corresponding to the competition room in which the participants participate through the replacing step through the communication with the user device 10 (S7), determines whether to complete the mission (S8), and withdraws a participant who completes the mission from the competition room (S9).

Hereinabove, exemplary embodiments of the present invention are illustrated and described. However, the present invention is not limited to the above-described exemplary embodiments and those skilled in the art may modify the present invention in various forms without departing from the gist of the present invention appended in the claims.

## Claims

1. A competition game operating system, the system comprising:
a competition room establishing unit which establishes one or more competition rooms for competition between different teams in an online game;
a competition room management unit which creates a virtual participant for an empty slot of each team so as to make a total number of members in each competition room equal or replaces any one of virtual participants belonging to any one of competition rooms with a participant corresponding to a user device;
a game executing unit which communicates with the user device to execute an online game corresponding to a competition room in which the user device participates;
a mission assigning unit which sets at least one mission to each of participants who participate in the competition room; and
a mission management unit which interworks with the game executing unit to withdraw a participant who completes the mission in the online game corresponding to the competition room.

2. The system of claim 1, wherein the competition room establishing unit sets a number of participants who is capable of participating in each team in advance to establish the competition room.

3. The system of claim 1, wherein the virtual participant is configured by an artificial intelligence character in an online game corresponding to the competition room.

4. The system of claim 1, wherein the competition room management unit provides a link for accessing the competition room and allows a user device which accesses through the link to randomly participate in any one of one or more competition rooms as the participant.

5. The system of claim 1, wherein the competition room management unit determines the number of virtual participants belonging to each of the competition rooms as a number of empty slots in which the participant is capable of participating and additionally establishes a competition room for a user device which accesses when the empty slots run out, by means of the competition room establishing unit to allow the user device to participate in the additional competition room as a participant.

6. The system of claim 1, wherein the mission assigning unit transmits mission information on a mission which is set correspondingly to each participant who participates in the competition room to the user device corresponding to the participant.

7. The system of claim 1, wherein the mission is to obtain points which are set in advance in an online game corresponding to the competition room or to remove a predetermined number of participants from an opposite team.

8. The system of claim 1, wherein the mission assigning unit provides a predetermined delay time to determine to cancel the participation at the time of starting an online game corresponding to the competition room and interworks with the competition room management unit to withdraw a participant who selects participation cancel within the predetermined delay time from the competition room.

9. The system of claim 1, wherein the competition room management unit preferentially assigns a participant who participates in the competition room to a team which has less participants among teams belonging to the competition room.

10. The system of claim 1, wherein when an empty slot is generated in the competition room due to the withdrawal of the participant, the mission management unit interworks with the competition room management unit to allow a virtual participant to participate in the empty slot of the competition room.

11. The system of claim 1, wherein when there is no participant in the competition room, the competition room management unit resets or removes the competition room.

12. The system of claim 11, wherein when the number of remaining competition rooms is equal to or smaller than a predetermined number of competition rooms, the competition room management unit does not reset or remove the competition room from which all participants corresponding to the user devices leave.

13. The system of claim 1, wherein the mission assigning unit randomly selects at least one of a plurality of predetermined different missions to set correspondingly to each participant, and the mission management unit withdraws a participant who completes all missions set by the mission assigning unit from the competition room.

14. The system of claim 1, wherein when a mission is completed, the mission management unit provides a predetermined reward corresponding to a completed mission to the user device.

15. A competition game operating method, the method comprising:
establishing one or more competition rooms for competition between different teams in an online game by means of an online game server which provides the online game;
generating a virtual participant for an empty slot of each team and allowing the virtual participant to participate in the empty slot by means of the online game server so as to make the total number of members in the teams belonging to the competition room equal;
replacing any one of virtual participants belonging to any one of the competition rooms with a participant corresponding to the user device;
setting at least one missions for each of participants who participate in the competition room, by means of the online game server; and
executing an online game corresponding to the competition room in which the participant participates through the replacing, by communicating with the user device, by means of the online game server, and withdrawing a participant who completes the mission from the competition room.

16. The method of claim 15, wherein the virtual participant is configured by an artificial intelligence character in an online game corresponding to the competition room.

17. The method of claim 15, wherein the participating further includes preferentially replacing a virtual participant of a team which has less participants among teams belonging to the competition room with a participant who participates in the competition room, by means of the online game server.

18. The method of claim 15, wherein the withdrawing further includes generating the virtual participant and allowing the virtual participant to participate in the empty slot of the competition room, by means of the online game server when an empty slot is generated in the competition room due to the withdrawal of the participant.
